(19) Europäisches Patentamt

European Patent Office

Office européen des brevets

(11) Publication number: **0 055 296**
**B1**

## (12) EUROPEAN PATENT SPECIFICATION

(45) Date of publication of patent specification: **14.05.86**

(51) Int. Cl.⁴: **G 01 N 21/88**

(21) Application number: **81900500.0**

(22) Date of filing: **26.02.81**

(86) International application number:
**PCT/JP81/00037**

(87) International publication number:
**WO 81/03705 24.12.81 Gazette 81/30**

(54) **ROTARY LIGHT TESTER FOR INSPECTING EMPTY CANS.**

(30) Priority: **18.06.80 JP 81378/80**

(43) Date of publication of application:
**07.07.82 Bulletin 82/27**

(45) Publication of the grant of the patent:
**14.05.86 Bulletin 86/20**

(84) Designated Contracting States:
**DE FR**

(56) References cited:
**JP-A-53 012 682**
**JP-A-53 067 489**
**US-A-3 416 659**
**US-A-4 074 809**
**US-A-4 105 122**

(73) Proprietor: **TOYO SEIKAN KAISHA LIMITED**
**3-1, Uchisaiwai-cho 1-chome Chiyoda-ku**
**Tokyo (JP)**

(72) Inventor: **SHIBASAKI, Kyuichi**
**12-14, Iwato 3-chome Yokosuka-shi**
**Kanagawa-ken 239 (JP)**
Inventor: **MORIMOTO, Kenji**
**6-19, Sangenjaya 2-chome, Setagaya-ku**
**Tokyo 154 (JP)**
Inventor: **ASHINA, Masato**
**44-3, Awata 2-chome Yokosuka-shi**
**Kanagawa-ken 239 (JP)**
Inventor: **KURASHIMA, Hideo**
**26-16, Iwato 3-chome Yokosuka-shi**
**Kanagawa-ken 239 (JP)**

(74) Representative: **Davies, Arthur Raymond et al**
**27, Imperial Square**
**Cheltenham, GL50 1RQ (GB)**

EP 0 055 296 B1

## Description

This invention relates to a rotary light tester for inspecting empty cans, and in particular for inspecting empty cans for various defects such as pinholes or cracks, without damaging the cans. Such defects generally result in leakage and occur in the manufacturing line for drawing and ironing can (DI can) bodies of a two-piece can.

In order that the invention may be more fully understood, reference will now be made, by way of example, to the accompanying drawings, in which:

Figure 1 is a schematic view of the principal parts of a conventional pinhole detection apparatus;

Figures 2A, 2B and 2C are sectional views of examples of conventional light seal plates usable in such apparatus;

Figure 3 is a central vertical section through a preferred embodiment of apparatus in accordance with this invention;

Figure 4 is a partly cutaway vertical section taken along the line IV—IV in Figure 3;

Figure 5 is a partly cutaway side view of the star wheel of such apparatus;

Figure 6 is a sectional view of a light seal plate not forming part of the present invention;

Figures 7 and 8 are explanatory views showing the light leakage attenuation action of the light seal plate of Figure 6;

Figure 9 is a sectional view of a similar light seal plate to that of Figure 6, and also not forming part of the present invention;

Figure 10 is a sectional view of a light seal plate used in the present invention;

Figure 11 is an explanatory view showing the light leakage attenuation action of the light seal plate of Figure 10;

Figure 12 is a graph illustrating the effect of the various types of light seal plate;

Figure 13 is a sectional view of a further embodiment of light seal plate used in the present invention;

Figure 14 is an enlarged sectional view taken along the line XIV—XIV in Figure 4;

Figure 15 is an enlarged side view showing the positional relationship between the light seal plates provided on the light seal wheel and the dark box provided on the left side frame of the apparatus;

Figure 16 is an enlarged central vertical section illustrating an empty can being inspected in the detection station;

Figure 17 is an explanatory view showing the light leakage attenuation action in the groove of the light seal plate of Figure 13; and

Figure 18 is a plan view of a vacuum groove and pressure aperture formed in an intermediate plate of the apparatus.

Inspection of empty DI cans for defects, such as pinholes or cracks, has conventionally been performed after coating or printing of the inner and outer surface of the can to prevent corrosion and to decorate the can after the trimming operation which cuts off the open end to a predetermined finish height. Then a neck and flange are formed at the open end. The amount of light transmitted through a pinhole of 100 μ diameter or less is effectively reduced to a level equivalent to that transmitted through a pinhole of about 10 μ diameter when the can has been covered with coatings or printing inks. Furthermore the amount of light transmitted through a pinhole of 20 μ diameter or less cannot be accurately detected. Accordingly the detection of defective cans having very small pinholes is extremely difficult. The accurate detection of defective cans is also rendered difficult by the fact that the luminous intensity of the transmitted light reaching the light detector is considerably decreased by the inner coating film which results in an absorptive attenuating action and reflective scatter of the light.

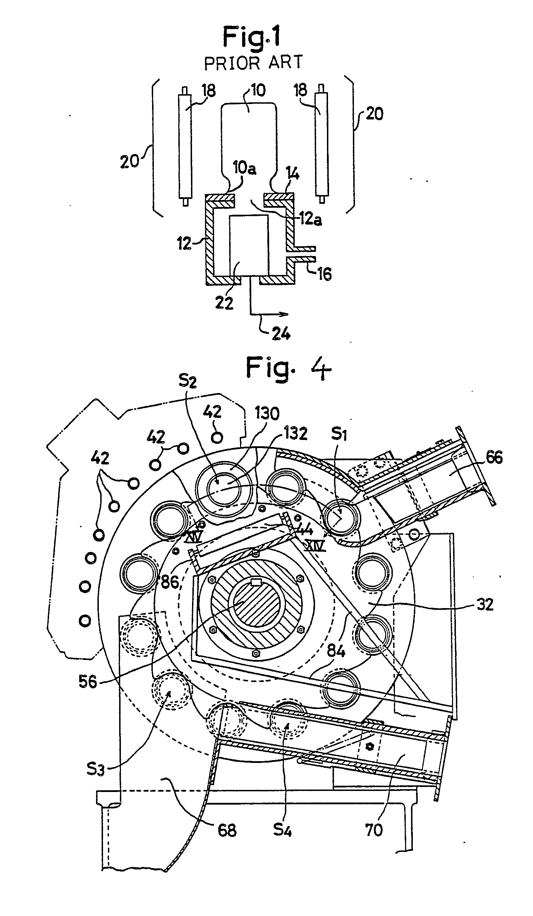

Conventional pinhole detection apparatus is described in U.S. Patent Specification No. US—A—3416659, and illustrated schematically in Figure 1. In this figure a flanged open end (10a) of the DI can (10) tightly contacts a light seal plate (14) of a dark box (12) with the DI can (10) being disposed upside down. The box (12) has a window (12a) and communicates with the interior of the can (10) through the window (12a). A vacuum pump (not shown) reduces the internal pressure of the box (12) and the can (10) through an exhaust opening (16) provided in a side wall of the box (12), and the resulting difference between the internal pressure and atmospheric pressure ensures a tight seal between the flange open end (10a) of the can (10) and the light seal plate (14). The light seal plate (14) comprises an opaque rubber packing, and the contact of the flanged open end (10a) with the light seal plate (14) provides a light proof seal. The can (10) is surrounded by light sources (18) and receives both direct light from the sources (18) and reflected light from a cylindrical reflector (20) surrounding the sources (18). A photodetector (22) within the dark box (12) detects any light received through the can (10) from the light sources (18) and converts the detected light into an electrical signal which is then supplied by way of an output (24) to a signal circuit (not shown), so that the presence of pinholes in the can (10) can be determined.

In use of the conventional apparatus of Figure 1, light from the light sources (18) which passes through any pinholes in the can (10) into the interior of the can (10) reaches the photodetector (22) either directly or after being repeatedly scattered and reflected from the inside wall of the can (10). The photodetector (22) is capable of detecting pinholes in any part of the can (10) by the combined optical action of light reflection and scattering, and has a quite high pinhole detection sensitivity.

However, in this conventional apparatus, light leakage through the seal between the flanged open end (10a) of the can (10) and the light seal plate (14) produces detection noise. To reduce the amount of light leakage, a tight seal must be formed between the flanged open end (10a) of the can (10) and the light seal plate (14) under the action of the reduced internal pressure within the box (12). As a result, considerable wear of the light seal plate (14) occurs. Generally, in the conventional apparatus, the can (10) which is subjected to said light detection operation should have the flange at its flanged open end (10a), in other words the end surface of the flanged open end (10a), rounded. But even this rounded flanged open end (10a) causes considerable wear of the conventional light seal plate (14) comprising a rubber packing. In general, if only one side is used, these plates last about two to three weeks and, if both sides are used, the plates last about six weeks, making replacement frequent and thus rendering maintenance of the detection apparatus difficult. In addition, use of a worn light seal plate (14) impairs error detection.

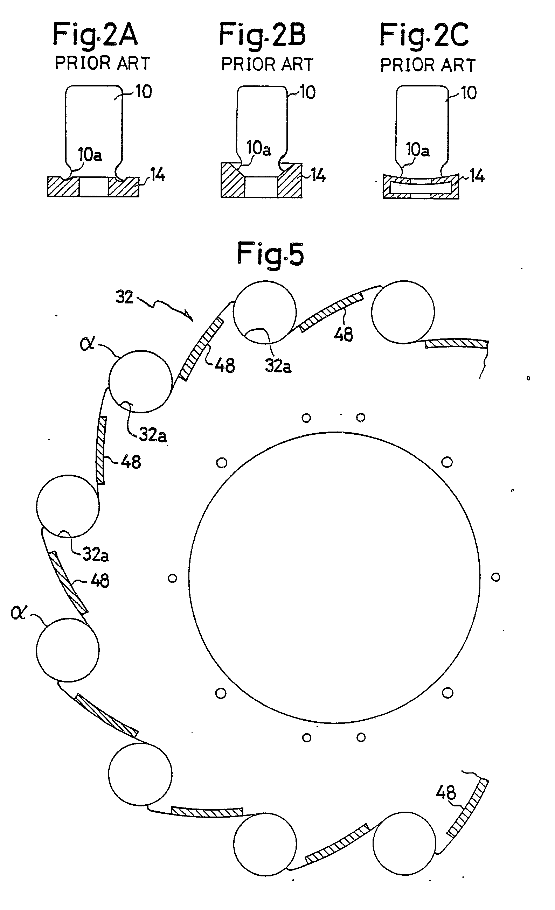

Figure 2 shows other examples of light seal plate (14) using conventional rubber packing. These examples illustrate various arrangements for reducing light leakage from the seal between the open end (10a) and the light seal plate (14). Figure 2A shows a dish-shaped concave annular portion provided in the sealing surface for sealing with the open end (10a), which portion receives the open end (10a). However, its form does not exactly match the open end (10a), and so the open end (10a) and the light seal plate (14) must be strongly pressed against one another. Figure 2B shows a funnel-shaped light seal plate (14). In this example, as in Figure 2A, any mismatch between the open end (10a) and the light seal plate (14) increases the amount of light leaked. Apparatus using this type of light seal is disclosed in US—A—4,105,122. Furthermore, Figure 2C shows a C-section annular light seal plate (14) capable of tightly sealing the open end (10a) with the light seal plate (14) with relatively slight contact pressure. However, too great a contact pressure and irregularity of the axial positioning of the can relative to the light seal plate (14) produce uneven deformation of the light seal plate (14), and hence a large amount of light leakage occurs. Also adjustment of contact pressure or contact position is time-consuming. Also pressure adjustment and adjustment of the contact position must be controlled.

Similarly problems are encountered in the detection of defective cans by the conventional air pressure method, since the coating or printing of the can covers pinholes on the inside and outside surfaces of the can. Thus detection of pinholes, particularly those of 100 μ diameter or less, becomes extremely difficult. In practice cans having pinholes covered with coatings or printing inks maintain good air tightness for only a few days. In most cases, pinholes produce leakage after a week and remarkably increase the ratio of cans which are defective. The occurrence of defective cans containing certain substances may have a disadvantageous effect on frequent consumers and this may be a very big problem.

As will be apparent from the above description, it is preferable to detect pinholes before coating or printing of the cans. As is well known, a can which has been subjected to ironing and drawing during DI processing has a neck and flange formed at its open end. On the other hand bright cans have the shape of the can before the flange processing. The trimmed end surface has a width of about 0.17 mm, which is very thick. As a result, should such an open end (10a) be caused to tightly contact the light seal plate (14), the light seal plate (14) would be considerably worn or even broken in some cases. Therefore, it is not practicable to detect pinholes by such a method before coating or printing.

Can pinhole detection apparatus described in Japanese Patent Public Disclosure No. 50-48983, published on May 1, 1975 in the name of Reynolds Metal Company, and Utility Model Public Disclosure No. 53-118685, published on September 20, 1978 in the name of Reynolds Metal Company and corresponding to United States Patent Specification No. US—A—3,750,877, makes use of a light seal plate in the form of a gasket of opaque rubber material being of the same material as the light seal plate (14) of Figure 1, and consists of a feed star wheel disposed in an empty can supply station, a central star wheel for feeding empty cans from the supply station to a light detector station and a discharge star wheel for receiving tested cans from the central star wheel and outputting the cans either to a defective can discharge station or to a good can discharge station. The mechanism and structure of such apparatus is of large size. In the discharge of good cans, the cans are mechanically held by a yoke which is opened and closed by actuation of a cam mechanism, the cans being released to the discharge star wheel by actuation of the cam mechanism to open the yoke when the cans arrive in the good can discharge station. In the discharge of defective cans, the cans are mechanically held by the yoke, the cans being released by another cam action to open the yoke when an actuating solenoid is operated on receipt of a delayed command signal. However, holding of empty cans by the yoke can easily produce scars on the outer surface of the empty can, and thus the quality of the discharged cans is reduced. Furthermore it is difficult to maintain and check the apparatus.

Apparatus for optically inspecting can bodies described in Japanese Patent Public Disclosure No. 53-12682, published on February 4, 1978 in the name of Coors Container Company and corresponding to United States Patent Specification No. US—A—4,074,809, makes use of an annular light seal plate of resilient plastics material having an inward C-shaped section, such as a hermetic ring of neoprene or urethane, instead of the light seal plate (14) of Figure 1. In the window (12a) of the dark box (12) of Figure 1, a sheet of transparent acrylic resin is hermetically disposed. When an empty can (10) arrives in the light detection station, the action of atmospheric pressure causes the hermetic ring to provide a hermetic light proof seal with the can by tightly contacting the flange (10a) of the can (10) with the portion of the ring facing the open end of the can (10). This requires the use of the pneumatic actuator which makes the structure mechanically complicated. The flanged opening of the can relative to the hermetic ring must be accurately positioned. If it is not, leakage of air pressure causes the light proof seal to be broken and produces detection errors. Wear of the hermetic ring leads to a similar result. In addition, air pressure causes the portion of the hermetic ring facing the can flange to substantially cover the flange end. Hence it is impossible to optically detect cracks in the flange end.

The object of the present invention is therefore to provide a rotary light tester for inspecting empty cans which avoids certain defects of the conventional apparatus and enables cans to be reliably tested, and in which minimum wear to the apparatus takes place in use, the inspection being made on empty cans immediately after the trimming operation.

Another object of the invention is to enable the provision of a rotary light tester for inspecting in an efficient manner empty cans with which the inspection is made on bright empty cans before the inner and outer surfaces of the cans are coated or printed.

Another object of the invention is to enable the provision of a rotary light tester for inspecting in an efficient manner empty cans with which the inspection is made on empty cans before they are subjected to necking and flanging operations.

A further object of the invention is to enable the provision of a rotary light tester for inspecting empty cans which makes it possible to accurately detect defective cans with minimum attenuation of any light transmitted into the interior of an empty can.

A further object of the invention is to enable the provision of a rotary light tester for inspecting empty cans with which maintenance can be carried out with ease and an annular light seal plate is used which has a wear resisting property and hence a long life before replacement becomes necessary.

A still further object of the invention is to enable the provision of a rotary light tester for inspecting empty cans which can be made compact and simple in its mechanism and structure and can be automatically driven at high speed.

A still further object of the invention is to enable the provision of a rotary light tester for inspecting empty cans which does not leave scars on the outer surface of a can during normal inspection operation.

A still further object of the invention is to enable the provision of a rotary light tester for inspecting empty cans which has an annular light seal plate of a form making it easy to coaxially position the open end of a can.

A still further object of the invention is to enable the provision of a rotary light tester for inspecting empty cans in which the annular light seal plate has a groove for accepting the open end of the can therein and is made of a harder material than that of the can.

A still further object of the invention is to enable the provision of a rotary light tester for inspecting empty cans which has an annular light seal plate having a groove which is specially formed to further attenuate the reflection of light emanating from outside the can.

An additional object of the invention is to enable the provision of a rotary light tester for inspecting empty cans which makes it possible to detect pinholes of 20 µ diameter or less with high accuracy.

According to the invention, there is provided a rotary light tester for inspecting empty cans, the tester comprising dark box means for excluding ambient light, said dark box means having an interior and a window communicating with said interior, annular light seal means adjacent said window and adapted to cooperate with an open end of a can to attenuate passage of light between said can end and said light seal means whilst ensuring that the interior of said can communicates with the interior of said dark box means through said window, light detector means within said dark box means for detecting light entering into the interior of said can through pinholes and defects in said can and for producing an electrical detection signal in response thereto, and light means arranged to be disposed externally of said can for irradiating said can with light said annular light seal means comprising receiving groove means defining an annular receiving groove adapted to receive the open end of said can, characterised in that said annular light seal means is made of a material of greater hardness than the material of said can, and in that said receiving groove means further defines a light trapping groove formed in the radially inner side wall of said annular receiving groove at a predetermined distance from the surface of said annular light seal means, said light trapping groove being in communication with said receiving groove and acting to attenuate any light entering said receiving groove from outside and passing towards the interior of said can (a).

The above and other advantages of the invention will become more apparent by reference to the following description and the accompanying drawings.

In a preferred embodiment of the invention, a respective annular light seal plate and freely movable slide pusher rotatable with a continuously rotating wheel and facing each other are associated with, and sandwiched therebetween, each of a plurality of can receiving seats equally spaced around the outer periphery of a star wheel. In an empty can supply station, cans are supplied to the receiving seats one by one and are held thereon by a vacuum applied through a nozzle at the end of each slide pusher. Then, in a light detector station, forward movement of each slide pusher inserts the open end of the associated can into a groove in the associated light seal plate, and a light detector outputs an electrical signal in proportion to the luminous intensity of light transmitted into the interior of the can. The slide pusher then moves backward and pulls the open end of the inspected can out of the groove. In a defective can discharge station, where the electrical signal constitutes a defective can detection signal, the vacuum pressure applied to a bottom end of the empty can by the slide pusher is released. Also spray pressure from the nozzle opening removes defective cans from the can receiving seats. In a good can discharge station, good empty cans fall off the can receiving seats under their own weight after the vacuum pressure applied by the slide pusher is released. This series of operations occurs for each rotation of the star wheel.

A preferred feature of this embodiment are the provision of a black non-lustre surface to the surface of the groove and the light trapping groove to further attenuate by repeated reflection any light penetrating from outside. This serves to attenuate leaked light entering via the open end of the can into the interior of the can down to a negligible level in comparison with light passing through any pinholes in the can. Therefore any light passing through pinholes is accurately detected. In addition, a conical opening may be formed in the entrance to the groove to make it easy to insert the open end of a can into the groove.

In this arrangement, a can is inspected while it is uncoated or unprinted bright state immediately after t rimming.

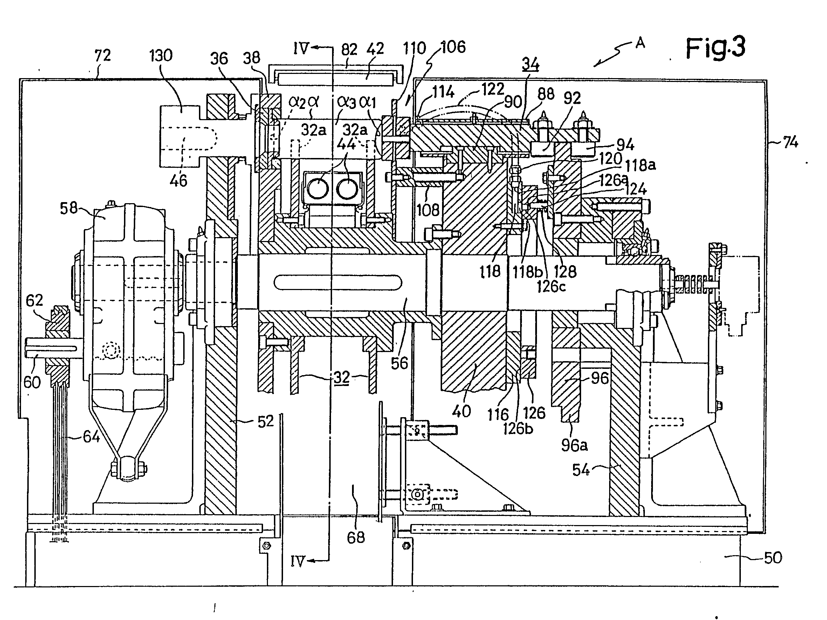

The detailed structure of the preferred embodiment according to the invention will now be described with reference to Figures 3 to 18 of the accompanying drawings.

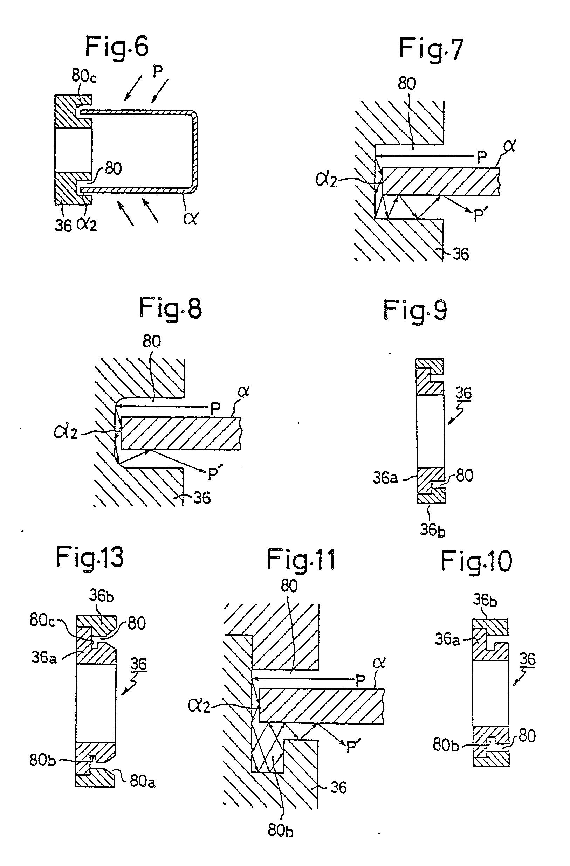

Referring particularly to Figure 3 in this embodiment the rotary light tester A for inspecting empty cans comprises a duplex star wheel 32 of transparent acrylic having arcuate can receiving seats 32a (see Figure 4) arranged to pass in turn, during rotation of the wheel, an empty can supply station S1, a light detector station S2, a defective can discharge station S3 and a good can discharge station S4. The star wheel 32 is arranged to receive uncoated or unprinted empty cans α one by one immediately after trimming. Arranged at equal intervals on the outer periphery of a pusher holder wheel 40 are slide pushers 34 which serve to push a bottom end α1 of an empty can α situated in a can receiving seat 32a in an axial direction. Facing the star wheel 32 is a light seal wheel 38 having annular light seal plates 36 thereon at equal intervals and arranged to receive the open end α2 of an empty can α pushed by a corresponding slide pusher 34. Upper and lower light sources 42, 44 are disposed in the light detector station S2 to irradiate a can α passing therethrough, and a light detector 46 is disposed at a position corresponding to the station S2 to detect light which passes into the interior α3 of the can α when the light seal plate 36 is aligned with the detector 46. As illustrated in Figure 5, plastic material 48 having a good sliding properties is provided on the outwardly facing inclined surfaces between adjacent can receiving seats 32a to make it easier to position a bright can α having poor sliding properties in its seat 32a and to discharge it therefrom. As shown in Figure 5, each can receiving seat 32a is part circular with the center of the part circle coinciding with the center of a can disposed within the can receiving seat. Broadly speaking, an imaginary radial line drawn from the center of the star wheel 32 to the center of the aforementioned part circle defining each seat 32a serves to divide an associated peripheral portion of the star wheel 32 into a first section which has a concave, part circular configuration constituting the can receiving seat and a second section which incorporates the surface provided with plastic material 48. As shown in Figure 3, the star wheel 32, the light seal wheel 38 and the pusher holder wheel 40 are axially fixed on a drive shaft 56 supported between left and right side frames 52, 54 which are disposed opposite to each other and are fixed on a base 50. The drive shaft 56 is driven by transmission of drive torque from a motor (not shown) by way of a V-belt 64 and a reduction gear 58 fixed at one end of the shaft 56.

As shown in Figure 4, an empty can supply inlet 66 in the station S1 supplies the can receiving seats 32a with empty cans, the cans being supplied one by one as the star wheel 32 rotates. A defective can discharge outlet 68 in the station S3 discharges cans α judged defected in the light detector station S2 from the can receiving seats 32a. A good can discharge outlet 70 of the station S4 discharges cans α judged good from the can receiving seats 32a. In addition, in Figure 3, 72 and 74 denote respectively housing covers.

Merely for explanatory purposes and not forming part of the inventive rotary light tester, Figure 6 shows a structure of an annular light seal plate 36 having a simple groove 80 into which an open end α2 of a can α may be inserted. The open end α2 of the can α extends to the bottom 80c of the groove 80. The light seal plate 36 is composed of a harder material than that of the can α, and therefore is not damaged by being contacted by the can α. This harder material is, for example, a superhard substance, a sintered ceramic or a hardening-face-treated steel. The hardening face treatment is preferably, for example, a nitriding treatment and metal or ceramic spray coating treatment.

The light attenuation action of the groove 80 reduces the amount of light leakage between the open end α2 and the light seal plate 36 to such a degree that the light leakage is negligible when the open end α2 of the can α is inserted in the groove 80 provided in the light seal plate 36. This effective decrease in the amount of light leakage is achieved whilst at the same time enabling the light from the light sources to reach all parts of the outside surface of the can α in view of the presence of a gap between the open end α2 of the can α and the light seal plate 36.

Figure 7 shows the attenuating effect of the amount of light leakage in the groove 80 of the light seal plate 36 of Figure 6. External light P penetrates into the gap between the can α and the groove 80. This light P is reflected at the bottom 80c of the groove 80 and leaks into the interior of the can by way of the gap between the open end α2 of the can and the bottom 80c of the groove 80. However, the leaked light P' is only transmitted after repeated reflections at the bottom 80c of the groove 80 with resulting simultaneous attenuation of the light, the light being directed into the interior α3 of the can α only after a series of reflections. Therefore the amount of leaked light P' entering the interior α3 of the can α is greatly reduced and is much smaller than that of light detected through pinholes. Hence it is possible to neglect the amount of light leakage. Basically, if the reflectivity within the groove 80 in the direction at 90° to the bottom 80c of the groove 80 is defined as η, the leaked light P' is expressed as $P' = η^2 \cdot P$. As will be apparent from this expression, a few reflections significantly attenuate the leaked light P'. The smaller the width and the greater the depth of the groove 80 the greater is the efficiency of the attenuating action. The width and depth of the groove 80 are preferably determined by experiment depending on the width and insertion operation of the can α.

In such a structure as in Figure 6, it is advantageous if the bottom end of the groove 80 in the light seal plate 36 meets the sides of the groove 80 at right angles. For example, as illustrated in Figure 8, if the edges of the bottom of the groove 80 are rounded, this makes it easier for external light P to enter into the interior of the can α with only a few reflections. Accordingly, such a rounded groove 80 limits the attenuation efficiency, and the edge of the groove 80 should be precisely machined in order to obtain optimum efficiency. Generally, the edges of the groove bottom are frequently rounded when the groove is directly machined in the light seal plate 36. To prevent occurrence of such roundedness therefore and as illustrated in Figure 9, it is advantageous for the light seal plate 36 to be a double structure in which right angled edges for the groove 80 are formed by combining an inner holder 36a and an outer holder 36b and bonding them together.

Figure 10 shows an embodiment of a light seal plate 36 forming part of the present invention. The inner holder 36a includes a trap 80b communicating with the groove 80 in the deepest portion thereof, the trap 80b providing efficient light attenuation action.

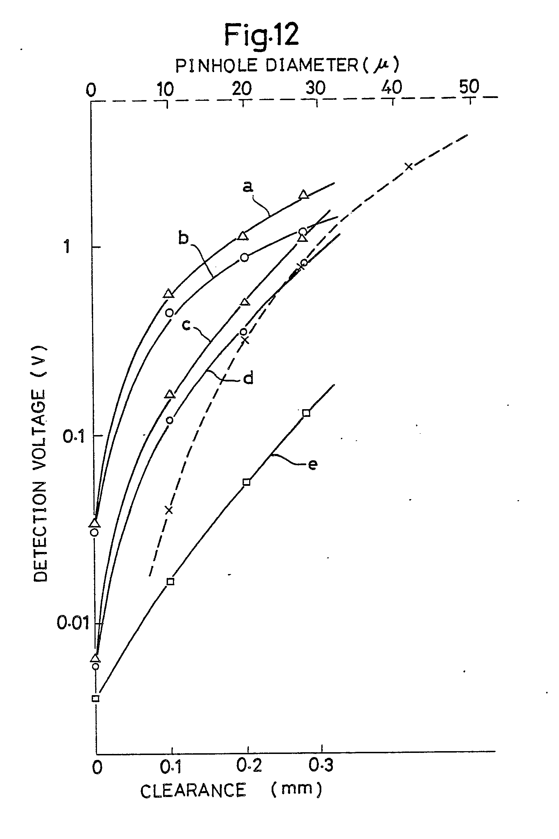

Figure 11 shows the light attenuation effect of the trap 80b in the embodiment of Figure 10. The light passing from the gap between the open end α2 and the groove 80 into the trap 80b is greatly attenuated with repeated reflections and then enters into the interior of the can α. Accordingly, in this embodiment, the light is subjected to the combined attenuating action of both the groove 80 and the trap 80b, and considerably limits the amount of leaked light P' entering the interior of the can α.

In this embodiment, the groove 80 is formed in the light seal plate 36 by a cutting operation resulting in the metallic lustre of the cut surface of the groove 80 providing a comparatively high coefficient of reflectivity. A low coefficient of reflectivity is obtained if the groove 80 is provided with a black non-lustre surface, for example by forming the groove 80 from black sintered ceramic material which reduces the amount of leaked light entering the interior of the can α.

Figure 12 shows the results of experiments to illustrate the effects of this invention. Ten photomultiplier tubes with an amplification factor of $10^6$ were used as the photodetector and provided with a 1000 volt supply. Ten 50 Hz, 100 volt, 6 watt fluorescent lamps were disposed around the can as the light source. The output signal from the photodetector was amplified by a factor of 500 and passed through a 1:1 bandpass filter (central frequency 100 Hz), and the maximum amplitude level of the signal (defined as the detection voltage) outputted from the filter was detected. In Figure 12, the broken line indicates the relationship between detection voltage and pinhole diameter with entry of light from outside perfectly blocked by the light seal plate. As will be apparent from this broken line, pinholes of 40 μ and 10 μ diameter correspond respectively to detection voltages of 2.2 volts and 40 millivolts.

The full lines in Figure 12 show the relationship between detection voltage and the level of light leaked through the various forms of light seal plate described above. These results were obtained with a can having no pinholes, and the horizontal axis in this case indicates the distance between the open end α2 of the can and the groove 80 which is defined as the clearance. The detection voltage corresponding to the level of leaked light for each of a number of possible clearances is shown by each full line in Figure 12. As will be apparent from the characteristics of each full line, with a 0 mm clearance, that is with the open end α2 contacting the bottom 80c of the groove 80, the detection voltage is very small. Furthermore Figure 12 shows that the light seal effect abruptly decreases as the clearance distance is increased. Plots (a) and (b) corresponding to the embodiment of Figures 6 and 7 having a groove 80 with depth of 3 mm, and width of 0.45 mm and 0.35 mm respectively. The wall thickness of the can α is 0.17 mm. As is clear from plots (a) and (b), with the open end α2 of the can α contacting the bottom 80c of the groove 80, the amount of leaked light is indicated by a detection voltage of 30 millivolts. This value of the detection voltage is equal to that obtained from light leakage through a 10 μ pinhole completely covered by a coating material or paint. Under these conditions, pinhole detection is possible.

Figure 12 also indicates plots (c) and (d) corresponding to light seal plate 36 having a trap 80b of the embodiment of Figures 10 and 11. By comparing these plots with plots (a) and (b) it is apparent that the effect of the trap 80b is to render the seal plate 36 more efficient in use under the same conditions.

In addition, plot (e) in Figure 12 corresponds to the embodiment having a black non-lustre inner surface to the groove 80 from which it will be seen that the provision of the black non-lustre surface considerably reduces the amount of light leakage.

The size of the groove 80 which is appropriate for the light seal plate 36 may be determined by the characteristics of Figure 12. In general, the ratio of the amount of light transmitted through pinholes to the amount of light leakage through the light seal plate 36 is between 1:5 and 1:10. To detect pinholes having diameters of 20 $\mu$ or above, for example, the groove 80 preferably has a width of 0.35 mm and a depth of 3 mm and has a trap 80b.

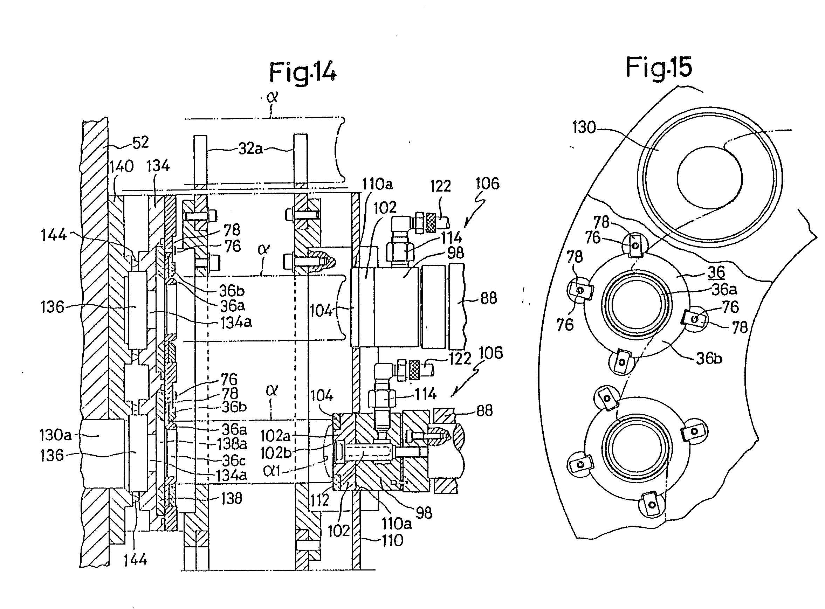

Figure 13 shows a further embodiment of light seal plate 36, which is similar to the embodiment of Figure 10. It is characterised in that a conical opening 80a is formed in the entrance of the groove 80 which makes it easy to insert the open end $\alpha2$ of the can $\alpha$ into the groove 80.

As will be apparent from the characteristics of Figure 12 it is preferable for that open end $\alpha2$ of the can $\alpha$ to contact the bottom 80c of the groove 80, and consequently for the can 10 to be pushed towards the bottom 80c of the groove 80 by hyaline push plates or the like in order to prevent the can $\alpha$ from floating. However, the arrangement does not require the application of a large pressure, such as is conventionally required as the contact pressure for pushing the can $\alpha$ against a rubber packing, but only sufficient pressure to prevent the can floating.

The light seal plate 36 illustrated in Figures 14 to 16 consists of a combination of an inner holder 36a and an outer holder 36b. The outer holder 36b is screwed down through a plate 78 so that the light seal plate 36 is easily replaceable by a new one or so as to enable it to be cleaned. This light seal plate 36 corresponds to the embodiment in accordance with Figure 13.

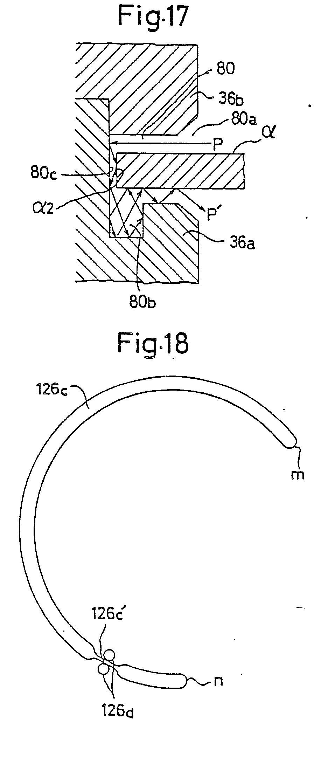

Figure 17 shows the attenuating effect on the amount of light leakage in the groove 80 of the light seal plate 36 in the embodiment of Figure 13. As with the embodiment of Figure 11 external light P penetrates into the gap between the can $\alpha$ and the groove 80. This light P is reflected at the bottom 80c of the groove 80 and leaks into the interior of the can by way of the gap between the open end $\alpha2$ of the can and the bottom 80c of the groove 80. The leaked light P' is only transmitted after repeated reflections at the bottom 80c of the groove 80 with resulting simultaneous attenuation of the light, the light being directed into the interior $\alpha3$ of the can $\alpha$ only after a series of reflections. Synergism of both the groove 80 and the trap 80b produces the great attenuation. Therefore, the amount of leaked light P' entering the interior $\alpha3$ of the can $\alpha$ is greatly reduced and is much smaller than that of light deflected through pinholes. Hence it is possible to neglect the amount of light leakage.

In addition, it is possible to reduce the coefficient of reflectivity by providing the groove 80 and the trap 80b with a black non-lustre surface. Therefore it is preferable for the groove 80 and the trap 80b to be formed from black sintered ceramic material which reduces the amount of light leakage into the interior of the can.

As shown in Figures 3 and 4, the upper light sources 42 are disposed along the inner surface of an arcuate reflector 82 provided above the station S2, at desired intervals therealong. On the other hand, the lower light sources 44 are disposed on a bracket 86 having a supporting member 84 below the station S2, to irradiate passing empty cans $\alpha$ during inspection.

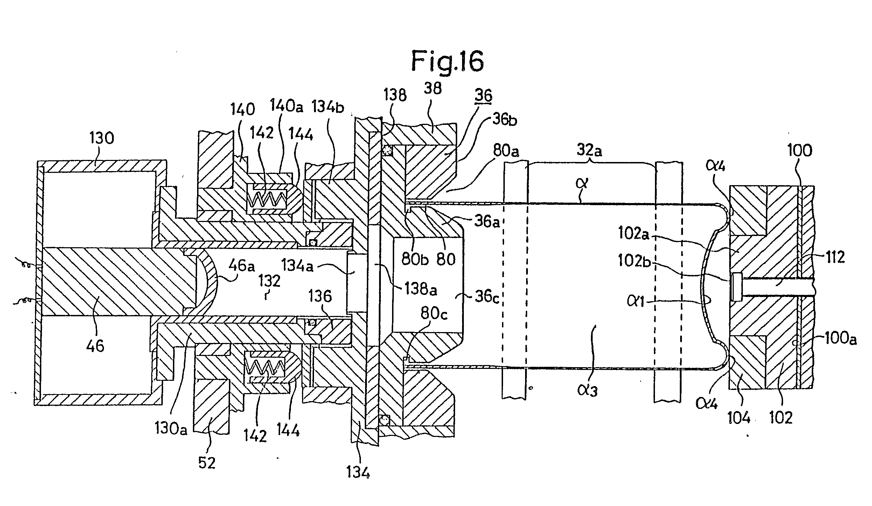

As illustrated in Figure 3, each slide pusher 34 is reciprocally movable in the axial direction in a guide sleeve 88 aligned with a respective can receiving seat 32a on the outer periphery of the pusher holder wheel 40. Reciprocating movement and rotation of the slide pusher 34 are limited by a sliding key 90. A pair of cam followers 92, 94 are rotatably mounted on a rearwardly projecting portion of the slide pusher 34 and sandwich therebetween a projecting portion 96a on the outer periphery of a circular cam plate 96 having a central hole for the drive shaft 56. This cam plate 96 is fixed to and extends from the right hand frame 54. The slide pusher 34, rotating together with the pusher holder wheel 40, is moved forward to its limit position just before passing the station S2 by means of the projecting cam portion 96a sandwiched between the cam followers 92, 94. As illustrated in Figures 14 and 16, a head 106 of the slide pusher 34 includes a transparent pusher face 102 attached to the end of a block part 98 with a shim 100 having a reflection surface 100a therebetween (see Figure 16), and a circular transparent inset 104 of natural rubber is provided on the outer periphery of a central projecting portion 102a of the pusher face 102 instead of a spring contacting a bottom end rim $\alpha4$ of the can $\alpha$, to prevent deformation and to cope with differences in height of the cans $\alpha$ after trimming. The head 106 is movably mounted within an opening 110a in a side guide plate 110 fixed to the free end of an arm 108 (see Figure 3) projecting from the pusher holder wheel 40. In the central projecting portion 102a, a nozzle opening 102b is provided to apply a vacuum to the bottom end $\alpha1$ of the can $\alpha$ when in the stations S1 to S4 and to apply a blast of air to the bottom end $\alpha1$ of each defective can $\alpha$ to remove it from its can receiving seat 32a.

The nozzle opening 102b communicates with a metal connector 114 by way of a nozzle 112 extending through the pusher face 102, the shim 100 and the block part 98. As shown in Figure 3, the connector 114 is connected by a tube 122 to a metal connector 120 attached to an upper end opening 118a of an L-shaped bore 118 in an attachment circular plate 116 on one side of the pusher holder wheel 40. An arm 124 projecting from one side of the circular cam plate 96 towards the circular plate 116 is connected to a muzzle 126a. A vacuum groove 126c is formed in an intermediate plate 126 and extends in a circular arc of about 240° stretching from the empty can supply station S1 to the good can discharge station S4, as shown in Figure 18. The groove 126c is formed in a sliding surface 126b of the intermediate plate 126 which contacts the circular plate 116 under the elastic force of a compressed coil spring 128 engaged around the arm 124. The groove 126c faces a lower end opening 118b of the L-shaped bore 118. Pressure apertures 126d are formed on both sides of a constriction 126c' corresponding to the defective can discharge station S3, as shown in Figure 18. The vacuum groove 126c communicates with the vacuum source (not shown), and the pressure apertures 126d are coupled to an atmospheric pressure source (not shown) only when a defective can detection signal is outputted by the light detector 46, with delay.

As illustrated in Figures 14 and 16, the light detector 46 has a detection end 46a within a window opening 132 defined by a window member 130a of the dark box 130 which extends through an upper portion of the left side frame 52 and is slidably and axially received within a window member receiving cyclindrical portion 134b, a window opening part 136 being fixed at the end of the window member 130a. A plurality of window member receiving cylindrical portions 134b project outwardly from a circular face plate 134 adjacent the light seal wheel 38 at equal intervals around the periphery of the face plate 134, each portion 134b having a through-aperture 134a at the center thereof. During an inspection the light detector 46 is axially aligned with the inside aperture 36c of the light seal plate 36 through an aperture 138a of a sliding ring 138 provided in front of the face plate 134 and surrounding the through-aperture 134a. The face plate 134 and the sliding ring 138 are maintained permanently in contact with the opposing sliding face of the light seal wheel 38 and light seal plates 36 by pressure applied to the window member receiving cylindrical portion 134b of the face plate 134 by a pusher 144 under the action of compression coil spings 142 housed in an annular projecting portion 140a of a back-up plate 140 fixed to the left side frame 52 by way of the window member 130a of the dark box 130.

In operation, initial starting of a motor (not shown) drives the drive shaft 56 at a fixed speed by way of the belt 64, the pulley 62, and the reduction gear 58.

Cans α fed from the empty can supply inlet 66 are supplied one after another to respective can receiving seats 32a of the star wheel 32, the slide pusher 34 associated with each such seat 32a being positioned at this time in its back limit position flush with the side guide plate 110 by the cam action of the circular cam plate 96. Simultaneously the advancing slide pusher 34 contacts the bottom end α1 of the can α with its head 106 and begins to push it in the axial direction. Then the nozzle opening 102b of the head 106 applies a vacuum to the bottom end α1 of the can α in response to the lower end opening 118b of the L-shaped bore 118 being placed in communication with an end (m) of the vacuum groove 126c in the intermediate plate 126 (see Figure 18). At the same time, the open end α2 of the can α is inserted into the opening 80a of the groove 80 in the associated light seal plate 36 on the light seal wheel 38 and the slide pusher 34 advances to cause the open end α2 to contact the groove bottom 80c. The slide pusher 34 is in its forward limit position just before reaching the station S2.

When a can α on the star wheel 32 reaches the station S2 it is irradiated by the upper and lower light sources 42, 44, the inside aperture 36c of the light seal plate 36 coinciding in this position with the aperture 138a in the sliding ring 138 provided adjacent the end of the dark box 130 to enable the light detector 46 to detect light entering the interior α3 of the can α through pinholes. The detector 46 outputs a defective can detection signal by way of a delay circuit (not shown) only when the amount of leakage exceeds a reference level.

After a can α on the rotating star wheel 32 passes the station S2, withdrawal of the slide pusher 34 begins under the cam action of the circular cam plate 96 and causes the open end α2 of the can α to be pulled out of the opening 80a of the groove 80 in the light seal plate 36 just before reaching the station S3. When the can α reaches the station S3, the lower end opening 118b of the L-shaped bore 118 of the attachmemt circular plate 116 coincides with the pressure apertures 126d in the intermediate plate 126 so as to enable a blast of air from the nozzle opening 102b of the slide pusher 34 to remove the bottom end α1 of the can α from the head 106 in the case of the can α being judged defective by the light detector 46, the pressure apertures 126d communicating with the atmospheric pressure source (not shown) on receipt of a delayed defective can detection signal. The defective can α then falls off the can receiving seat 32a into the defective can discharge outlet 68 under its own weight and finally is discharged from the apparatus.

Where a can α has been judged good in the station S2, the can α passes the station S3 with the bottom end α1 held under vacuum in contact with the can receiving seat 32a. Then, in the station S4, the vacuum retaining force is reduced down to 0 after the lower end opening 118b of the L-shaped bore 118 in the attachment circular plate 116 passes the end (n) of the vacuum groove 126c in the intermediate plate 126 (see Figure 18). The can α then falls off the can receiving seat 32a into the good can discharge outlet 70 under its own weight and finally is discharged from the apparatus (A).

The apparatus continuously judges whether or not cans α are defective and discharges them to the appropriate outlet during rotation of the star wheel 32.

In this arrangement, insertion of the open end α2 of the empty can α into the groove 80 provided in the light seal plate 36 reduces the amount of light leakage from the gap between the open end α2 of the can and the light seal plate 36 to substantially negligible amounts due to the light attenuating action of the groove 80. The amount of permitted leaked light entering the interior of the can is effectively reduced without completely preventing light penetration into the gap between the open end α2 and the light seal plate 36. Therefore there is no need for the application of high sealing pressure to the open end α2 which has a very thin end wall thickness of about 0.17 mm. This would be difficult to achieve immediately after trimming, and might damage the light seal plate 36 if this were of conventional rubber packing. Furthermore, it is possible to accurately detect trimmed defective cans having a shorter than average finish height. In addition, the detection of uncoated or unprinted bright cans makes it possible to detect pinholes of 25 μ diameter or less with high accuracy.

As mentioned above, this construction can utilise materials of high hardness having good wear resistant properties for the light seal plate, and thus greatly lengthen the maintenance and replacement term by restricting wearing of the light seal plate, since the contact pressure is so small. In considering the wear of the light seal plate, pinhole detection is made before the open end of the can has been rounded by the coating or printing process, and so the occurrence of error detection resulting from covering pinholes with coating material or printing ink can be prevented. In addition, since pinholes are detected before coating or printing, the contamination of the mandrel during the printing or coating process by penetration of coating material or printing ink through pinholes into the interior of the can is effectively prevented.

As mentioned above, this constructional arrangement provides pinhole detection apparatus which can be used continuously over a long period of time and is available for use in inspecting cans in various can manufacturing processes.

In addition, the apparatus is able to automatically determine whether or not a can is defective with high accuracy and high working efficiency, and enables rationalisation, mechanisation, reduction of labour and cost, and production of high quality goods.

**Claims**

1. A rotary light tester for inspecting empty cans, the tester comprising dark box means (130) for excluding ambient light (P), said dark box means (130) having an interior (132) and a window (134a) communicating with said interior (132), annular light seal means (36) adjacent said window (134a) and adapted to cooperate with an open end (α2) of a can (α) to attenuate passage of light (P, P') between said can end (α2) and said light seal means (36) whilst ensuring that the interior (α3) of said can (α) communicates with the interior (132) of said dark box means (130) through said window (134a), light detector means (46) within said dark box means (130) for detecting light entering into the interior (α3) of said can (α) through pinholes and defects in said can (α) and for producing an electrical detection signal in response thereto, and light means (42, 44) arranged to be disposed externally of said can (α) for irradiating said can (α) with light (P), said annular light seal means (36) comprising receiving groove means defining an annular receiving groove (80) adapted to receive the open end (α2) of said can (α), characterised in that said annular light seal means (36) is made of a material of greater hardness than the material of said can (α), and in that said receiving groove means further defines a light trapping groove (80b) formed in the radially inner side wall of said annular receiving groove (80) at a predetermined distance from the surface of said annular light seal means (36), said light trapping groove (80b) being in communication with said receiving groove (80) and acting to attenuate any light (P') entering said receiving groove (80) from outside and passing towards the interior (α3) of said can (α).

2. A rotary light tester according to claim 1, characterised in that said light seal means (36) is made of a steel material which has been subjected to nitriding.

3. A rotary light tester according to claim 1 or 2, characterised in that a black non-lustre coating is applied to the surfaces of the receiving and trap grooves (80, 80b) of said light seal means (36).

**Patentansprüche**

1. Rotierende Lichtinspektionsvorrichtung zur Inspektion leerer Dosen, mit einer Dunkelbehältniseinrichtung (130) zum Fernhalten des Umgebungslichtes (P), wobei die Dunkelbehältniseinrichtung (130) einen Innenraum (132) hat, sowie ein Fenster (134a), welches mit dem Innenraum (132) in Verbindung steht, eine ringförmige Lichtverschlusseinrichtung (36) neben dem Fenster (134a), die zum Zusammenwirken mit einem offenen Ende (α2) einer Dose (α) ausgelegt ist, um den Durchgang von Licht (P, P') zwischen dem Dosenende (α2) und der Lichtverschlussvorrichtung (36) abzuschwächen, während sie sicherstellt, dass das Innere (α3) der Dose (α) mit dem Innenraum (132) der Dunkelbehältniseinrichtung (130) über das Fenster (134a) in Verbindung steht, eine Lichtdetektoreinrichtung (46) in der Dunkelbehältniseinrichtung (130) zum Feststellen von Licht, welches in das Innere (α3) der Dose (α) durch feine Löcher oder Fehler in der Dose (α) eintritt und, um ein elektrisches Detektorsignal daraufhin zu erzeugen une eine Leuchteinrichtung (42, 44), welche ausgelegt ist, um ausserhalb der Dose (48) angeordnet zu werden, um die Dose (α) mit Licht (P) anzustrahlen, wobei die ringförmige Lichtverschlusseinrichtung (36) Aufnahmenuteinrichtungen hat, welche eine ringförmige Aufnahmenut (80) bilden, welche ausgelegt ist, um das offene Ende (α2) der Dose (α) aufzunehmen, dadurch gekennzeichnet, dass die ringförmige Lichtverschlusseinrichtung (36) aus einem Material von grösserer Härte wie das Material der Dose (α) gefertigt ist und, dass die Aufnahmenutvorrichtung desweiteren eine Lichtfallennut (80b) bildet, welche in der radial nach innen liegenden Seitenwand der ringförmigen Aufnahmenut (80) in einem vorgegebenen Abstand von der Oberfläche der ringförmigen Lichtverschlussvorrichtung (36) liegt, wobei die Lichtfallennut (80b) mit der Aufnahmenut (80) in Verbindung steht und dahin wirkt jegliches Licht (P'), welches in die Aufnahmenut (80) von aussen eintritt, und in Richtung des Innern (α3) der Dose (α) weiterläuft, abzuschwächen.

2. Rotierende Lichtinspektionsvorrichtung nach Anspruch 1, dadurch gekennzeichnet, dass die Lichtverschlussvorrichtung (36) aus einem stählernen Material hergestellt ist, welches einer Nitrierhärtung ausgesetzt worden ist.

3. Rotierende Lichtinspektionsvorrichtung nach Anspruch 1 oder 2, dadurch gekennzeichnet, dass ein nicht glänzender schwarzer Überzug auf den Oberflächen der Aufnahme- und Fallennuten (80, 80b) der Lichtverschlusseinrichtung (36) aufgebracht ist.

**Revendications**

1. Appareil rotatif de contrôle par utilisation de la lumière pour contrôler des boîtes vides comprenant un moyen (130) de chambre noire pour exclure la lumière ambiante (P), ledit moyen (130) de chambre noire ayant un intérieur (132) et une fenêtre (134a) communiquant avec ledit intérieur (132), un obturateur (36) annulaire adjacent à ladite fenêtre (134a) et adapté pour coopérer avec une extrémité (α2) ouverte de la boîte (α) pour atténuer la passage de lumière (P, P') entre ladite extrémité (α2) de boîtier et ledit obturateur (36) tout en assurant que l'intérieur (α3) boîte (α) communique avec l'intérieur (132) du moyen (130) de chambre noire par ladite fenêtre (134a), un moyen détecteur de lumière (46) dans ledit moyen (130) de chambre noire pour détecter la lumière entrant dans l'intérieur (α3) de la boîte (α) par des trous fins et défauts dans ladite boîte et pour produire un signal électrique de détection en réponse à cette lumière, et un dispositif (42, 44) d'illumination arrangé pour être disposé à l'extérieur de ladite boîte (α) pour irradier la boîte (α) avec la lumière (P), ledit obturateur (36) annulaire comprenant un moyen de rainure de réception définissant une rainure de réception (80) annulaire adaptée pour recevoir l'extrémité ouverte (α2) de la boîte (α), caractérisé en ce que ledit obturateur annulaire (36) est fabriqué à partir d'une matière ayant dureté plus grande que la matière de la boîte (α) et en ce que le moyen à rainure de réception définit en outre une rainure piège de lumière (80b) réalisée dans la paroi latérale radialement intérieure du moyen annulaire à rainure de réception (80) à une distance prédéterminée de la surface dudit obturateur (36) annulaire, ladite rainure piège de lumière (80b) communiquant avec ladite rainure de réception (80) et agissant pour atténuer toute lumière (P') entrant dans ladite rainure de réception (80) de l'extérieur et passant vers l'intérieur (α3) de la boîte (α).

2. Appareil rotatif de contrôle par utilisation de la lumière selon la revendication 1, caractérisé en ce que ledit obturateur (36) est fabriqué en un matériau acier que a été soumis à une nitruration.

3. Appareil rotatif de contrôle par utilisation de la lumière selon la revendication 1 ou 2, caractérisé en ce qu'un revêtement noir non brillant est appliqué à la surface des rainures (80, 80b) de réception et piège du moyen obturateur (36).

# Fig.1
## PRIOR ART

# Fig. 4

# Fig·2A
PRIOR ART

# Fig·2B
PRIOR ART

# Fig·2C
PRIOR ART

# Fig·5

Fig.3

Fig.6

Fig.7

Fig.8

Fig.9

Fig.13

Fig.11

Fig.10

# Fig.12

# Fig.14

# Fig.15

Fig.16

0 055 296

## Fig.17

## Fig.18